# EUROPEAN PATENT APPLICATION

(11) **EP 2 528 347 A1**
(43) Date of publication of application: **28.11.2012**
(21) Application number: 12169497.0
(22) Date of filing: 25.05.2012
(51) Int. Cl.: H04N 21/436, H04L 12/28

(54) **Media sharing**

(30) Priority: 26.05.2011 GB 201108898
(71) Applicant: Vodafone IP Licensing Limited, The Connection Newbury Berkshire RG14 2FN (GB)
(72) Inventor: Picker, Stefano, Newbury, Berkshire RG14 2FN (GB); Sandberg, Linda, Newbury, Berkshire RG14 2FN (GB); Sharples, Meredith, Newbury, Berkshire RG14 2FN (GB)
(74) Representative: Sneary, Adrian Bernard

(57) **Abstract**

Media server 10 and method comprising: a media input (15) configured to receive media. A Transcoder (25) for converting media from an initial format to a compatible format. Logic (35) configured to: receive information identifying a rendering device (20). Receive a request for media from the rendering device (20). Determine if the requested media is in a format compatible with the rendering device (20). If not in a compatible format then instruct the transcoder (25) to convert the requested media into a compatible format of the rendering device (20).

## Description

### Field of the Invention

The present invention relates to a method and device for sharing media and in particular a media server.

### Background of the Invention

Media comes in many formats and may be consumed using many different types of devices. The variety of media formats is set to increase as consumers change their viewing habits and ways in which they consume media.

Various techniques and procedures are required in order to convert one media format into another. This requires detailed technical expertise on the part of the consumer and specialist hardware and software that may require careful configuration. All of these additional overheads and difficulties distract from a pleasurable viewing experience. Furthermore, such a specialist system may require continued reconfiguration or updates as different types of media and media formats become available and are requested.

Various software and hardware servers are available to stream media from one device to another. For example, a digital living network alliance (DLNA) server may reside within a home computer system to stream media stored on the computer to a renderer such as a television set, which may contain a DLNA client. However, the streamed media must be in a format suitable for viewing on the television set, which otherwise will not be able to correctly render the media. Additional software or hardware may be present to convert the media from one format to another. This type of conversion is known as transcoding and may take place in real time as media is being streamed from one device to another or may take place as a batch process with the converted media being stored at some location. Even with the ability to transcode files from one format to another, media servers may not be able to provide a rendering device with correctly formatted media or require additional manual steps before the media can be displayed correctly.

Therefore, there is required a media server method that overcomes these problems.

### Summary of the Invention

Against this background and in accordance with a first aspect there is provided a media server comprising: a media input configured to receive media; a transcoder for converting media from an initial format to a compatible format; and logic and/or a processor configured to: receive information identifying a rendering device, receive a request for media from the rendering device, determine if the requested media is in a format compatible with the rendering device, and if not in a compatible format then instruct the transcoder to convert the requested media into a compatible format of the rendering device.

According to an illustrative example, there is provided a media server comprising: a media input configured to receive media; a transcoder for converting media from an initial format to a requested format; and a processor arranged to receive information on the requested format from a rendering device, instruct the transcoder to convert the received media from the initial format into the requested format, and transmit the converted media to the rendering device.

Therefore, a rendering device that may be internal or external to the media server such as a requesting device or a renderer may receive media in a format suitable to be played, viewed or rendered. Receipt of a request from the rendering device improves reliability as the media server can ensure that the correct format is served and played back. This also reduces manual set up and configuration especially when new devices utilise the system as they can send or transmit a specific request for media in a playable format and the transcoder can translate or convert the media to the requested format rather than rely on such a format being available. Therefore, plug and play capabilities can be improved for a greater range of devices both on the media supply side and the rendering or viewing side of the system.

Transcoding may also be described as converting one or more aspects of media or content from one form to another. This may involve minor or major changes to resolution, changes to file or package container types, codec changes, changes in audio, video or subtitles (e.g. language changes) or a combination of any or all of these conversions. Transcoding may be carried out on-demand to provide real-time conversion or it may be carried out in advance of consumption with transcoded media stored or buffered for later use.

The media input may receive media from one or more external or internal sources. External sources may be other servers, computers on the same or a different network or live streams of media, for example. Internal sources may include stored media such as files within one or more hard drives or solid state storages, for example.

Optionally, the media server may further comprise data describing compatible formats for a plurality of rendering devices. These data may be a database, file, XML, cache, table, lookup table or other format. An adaptation layer may determine the type of rendering device making the request for media and determine or find any or all compatible formats including container, codec, resolution, etc.

Preferably, the transcoder may be a hardware transcoder. This improves performance and resources and may be supplied by a separate chipset, CPU or GPU.

Optionally, the media server may further comprise a data storage for storing the media in either or both the initial format and/or the requested or converted format. For example, this may be an internal memory drive (e.g. HDD or SSD) within the media server or an external memory drive. Alternatively, the data storage may be accessible over a network such as the Internet to facilitate cloud-based storage.

Optionally, the media input may be configured to receive media from an external network. This network may be a home LAN, an intranet or the Internet for example.

Preferably, the transcoder may be arranged to transcode the media at the same rate that the media is received at the media input or required by the rendering device. Therefore, the rendering or external device may provide the media in real-time or on demand.

Preferably, the media server may further comprise an interface configured to communicate with the rendering device, receive the information on the requested format and/or information identifying the rendering device and the request and/or transmit the converted or requested media. The interface may include suitable electrical connections as well as software or hardware controllers.

Preferably, the interface is configured to use digital living network alliance, DLNA, and/or universal plug and play, UPnP, protocols. Other suitable or similar protocols may be implemented. An example DLNA server that may be used is the TwonkyServer (RTM) from PacketVideo Corp.

Preferably, the initial format and the requested or converted format may be any one or more video codecs selected from the group consisting of MPEG-2, MPEG-4, H.264, AVC, WMV, VC1, DivX, XVid, MPEG-1, H.263, Theora, RLE, Real Video and Motion JPEG. Other formats or combinations may be used.

Preferably, the initial format and the requested or converted format may be any one or more video containers selected from the group consisting of AVI, AVC, MKV, MPEG2-TS, MPEG2-PS, MOV, MP4, M2TS, 3GPP, OGM, ASF, FLV, LATM, NSV and RM. Other formats or combinations may be used.

Optionally, the logic or processor may be further arranged to transmit the converted media in a format suitable to be stored for later playback on the rendering device.

Preferably, the media may be any one or more selected from the group consisting of: still image; video; audio; music; text; electronic book; 3D video; digital media; analogue media; live video; live audio; and games. The media may be digital media or digital content in any form. According to a second aspect, there is provided a method of serving media comprising the steps of: receiving information identifying a rendering device; receiving a request for media from the rendering device, determining if the requested media is in a format compatible with the rendering device, and if not in a compatible format then converting the received media from the initial format to the requested format; and sending the requested media to the rendering device in the compatible format

According to an illustrative example, there is provided a method of converting media comprising the steps of: receiving a requested format from a rendering device; receive media in an initial format; instructing a transcoder to convert the received media from the initial format to the requested format; and send the converted media to the rendering device.

Preferably, determining if the requested media is in a format compatible with the rendering device may further comprise the step of consulting data describing compatible formats for a plurality of rendering devices.

The rendering device may include sideloading capabilities. For example, the rendering device may be a portable device such as a mobile telephone or tablet computer, which may receive the converted media and store it for later playback or rendering one or more times. A combination of receiving the converted media in a requested format and persistent storage provides additional benefits such as improved convenience and flexibility. Furthermore, the converted media may be sent or sideloaded over a network (e.g. mobile network, GSM, 3G, 4G, WiFi, etc.) to provide the end user with media in the correct format for their particular rendering device when away from home, whilst reducing configuration and setup complexity.

The media server or method may be implemented as a computer program comprising program instructions that, when executed on a computer cause the computer to perform the method described above. The computer program may be stored on a computer readable medium or transmitted as a signal.

According to a further aspect, a system may include the media server described above, a media source and a rendering device.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system including a media server for converting media from one format to another;
FIG. 2 shows a schematic diagram of a system including the media server of fig. 1 connected to a network and computer;
FIG. 3 shows a system including the media server of fig. 1 connected to a further network and computer;
FIG.4 shows a schematic diagram of a file network connected to the media server of fig. 1;
FIG. 5 shows a schematic diagram illustrating the interaction of rendering devices with the media server of fig. 1;
FIG. 6 shows a schematic diagram of the media server of fig. 1 interacting with media sources;
FIG. 7 shows a screen shot of a computer system including media files used in the media server of fig. 1;
FIG. 8 shows a schematic diagram including a screen shot of media files, together with a rendering device;
FIG. 9 shows a schematic diagram of a computer interface used to control media files for use with the media server of fig. 1;
FIG. 10 shows schematic diagrams of a handheld computer used to receive media files from the media server of fig. 1;
FIG. 11 shows a schematic diagram of interface connectors of the media server of fig. 1; and
FIG. 12 shows a schematic diagram of a method for converting media.

It should be noted that the figures are illustrated for simplicity and are not necessarily drawn to scale.

### Detailed description of the preferred embodiments

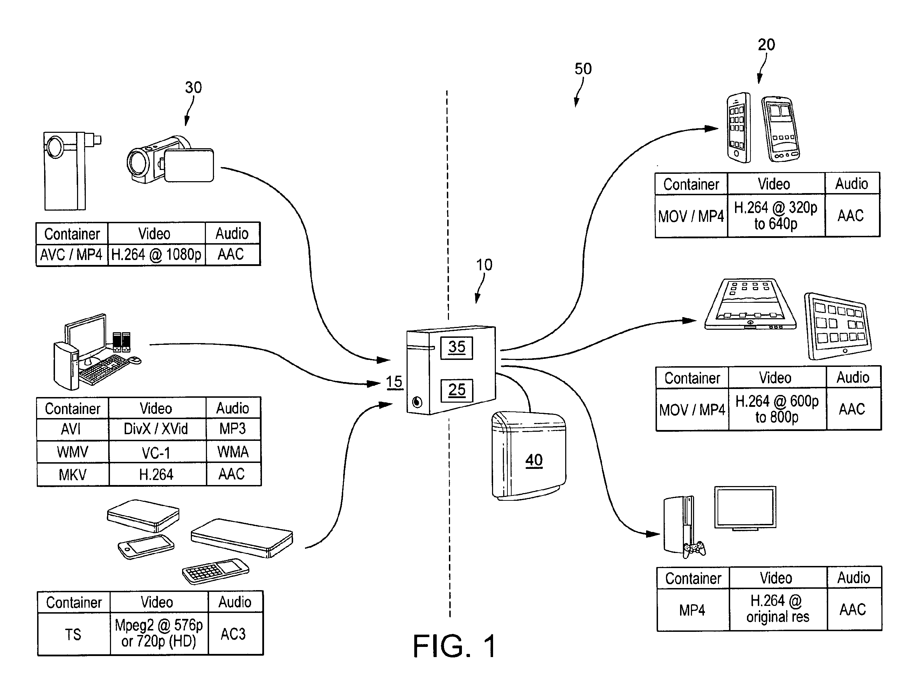

Figure 1 shows a schematic diagram of a media server 10 providing media to various media rendering devices 20 from media input devices 30 or media sources. The media server is also connected to its own data storage system 40, can be included in the system if additional or local storage is required. This collection of components forms a system 50 for providing media or content to one or more users. The media rendering devices 20 include types such as mobile telephones, tablet computers, games consoles and televisions amongst others. The media sources 30 include cameras, camcorders, home computer systems and network storage devices.

The media server has one or more media inputs 15 to receive media from the media sources 30. The media server 10 also contains a transcoder 25 in the form of dedicated software or hardware that can convert media from an initial or original format into a format playable on the rendering devices 20. For example, the transcoder 25 may be an XCode (RTM) chip set from the ViXS Systems, Inc. Other transcoders may be used. Figure 1 also shows the various input media types and file containers as well as an example set of transcoded output formats to be rendered. Streamed media may also be transcoded. A processor 35 or CPU within the media server 10 (not shown in this figure) is arranged to control the device and its functions. The processor 35 is controlled by logic preferably in the form or programming instructions. In one operation, the processor 35 receives information from a rendering device 20, which may be external to the media server 10. This information may include an identifier of the type of rendering device 20 and/or details of a media format requested by the media renderer 20. The rendering device 20 may broadcast its type or include it in any requests. For example, a mobile telephone may identify itself with the media server (e.g. "iPhone 4S" with or without operating system identifier) and may (or may not) also request H.264 video within an MOV file container. The processor 35 then instructs the transcoder to convert the media, which may be from a home computer stored as an AVI file having DivX video, into the requested MOV container H.264 video format with a particular resolution. Again, a resolution request may be included in the information sent by the rendering device 20 to the media server 10. The processor 35 may then take the transcoded media and send it to the requesting media renderer 20 in the correct or requested format. The transcoder 25 may be incorporated or separate from the processor 35. The processor 35 may be a CPU such as an Atom (RTM) dual core processor, for example.

The rendering device 20 may request a media item from the media server without specifying a requested format. In order to determine a compatible format, the processor 35 may obtain information identifying the rendering device 20 (e.g. make, model, type, software version, etc.) The media server may then consult, lookup or cross-reference this obtained rendering device 20 identifier with data specifying compatible formats that may be playable or renderable by the rendering device 20. These compatibility data may take the form of a database, file, table, or other convenient form. The data may be stored locally or queried across a network such as the Internet, for example. The compatibility data may be static or dynamic and updateable.

Should it not be possible to find the rendering device 20 in the compatibility data or not find any compatible formats then a default format may be selected. The default format may be a format common to many or all rendering devices and therefore provide the best opportunity or chance of successfully rendering the media on an unknown device. If the existing format of the media is already noted as being compatible with the rendering device 20 then no conversion is required and the media is transmitted in its current or original format.

The compatibility data may be implemented within an adaptation layer in the form of a matrix between known and/or tested rendering devices 20 and each existing media container. Therefore, this adaption layer may define what to transcode and which format to use.

Further technical details of the media server 10 are shown in table 1.

**TABLE 1**

| | |
|---|---|
| Internal Storage | One Hard Drive for the whole requested memory size (single-bay device). |
| Main processor, flash memory, transcoding chipset etc. | Both a main chipset with sufficient performance or the addition of a separate transcoding chipset. |
| Ethernet Port | RJ-45 jack. The device supports the Ethernet service independent of the operating system of the attached device. The device supports Ethernet, Fast Ethernet, Gigabit Ethernet with auto negotiate for speed. |
| Network protocols | HTTP, TCP/IP, NTP, FTP, SMB. |
| Network support | IP v4 and IP v6. |
| iTunes server | Fully compatible with Apple's specifications. |
| Power port and power supply unit (PSU) | The device supports an AC input voltage range of 110v to 240V at 50Hz to 60Hz. |
| USB Port | USB 2.0 High Speed. USB 3.0 may also be available. |
| Management of external USB storage | Available memory may be increased by plugging in a USB external hard drive. |
| Card Reader | Support of SDHC. |
| Power Button | Power button / lever with Power On / Off. |

| Linux Operating System | |
|---|---|
| HTML local pages | File listing, device management, settings, etc. |
| Device mounted as network storage | Seamless access from Windows, Mac OS X and Linux, via web browser with or without the installation of any client. |
| DHCP | Standard seamless authentication with routers. |
| Dynamic DNS | Local Dynamic DNS: web based access to the NAS from any device on a home network, through a local URL, preferably without the need to know its private IP address (for example UPnP). Internet Dynamic DNS: compatibility with online DDNS services. |
| DLNA Server | Implementation of Packet Video's Twonky DLNA Server. Streaming of Audio, Video and Photos. Support of the transcoding features as described ahead. |
| Cloud storage compatibility | Readiness to support upload / sync features with a cloud storage service. Application: resident on the NAS, based on the APIs provided by the cloud supplier, manageable through web pages and dedicated clients. |
| Support of external clients | Windows, Mac OS X, Apple lOS, Android. See 'Computer Clients' and 'Mobile Clients'. Furthermore, openness to support other third-party clients to backup, sync and restore files and content from / to the NAS, through a complete set of APIs. |
| Remote upgrade | Remote upgrade of the product firmware through the network, for either bug fixing or addition of new features. |
| Direct copy | One touch transfer of files from digital cameras / camcorders or any other USB device into a purposely created folder, through the device USB port. |
| Remote access | Automatic setup of port forwarding and any other setting needed to enable remote access to the NAS device. Support of TR-069 is preferred. |
| Support of future developments involving premium / encrypted content | DTCP/IP compatibility and readiness. |
| Computer clients features | The desired computer experience includes: |
| | - the creation of virtual folders, visible and accessible as though they were local folders once the client is installed, and supporting the drag-&-drop of files or entire folders; |
| | - the capability to perform pre-transcoding of media content through specific commands and/or by moving media files into specific "active" folders; |
| | - a feature to retrieve files from the NAS via keyword, name, date, location etc. (through the use of as many meta-data as possible) |
| | - an agent which constantly keeps synced entire media categories (e.g. all the videos, songs and/or pictures found on the computer) and/or every files in selected folders, and defines: which synced folders to set as shared across the home network, which to keep private for a single family member (profiles management). The client also supports the backup in a specific "Recycle Bin" folder on the NAS of synced files/folders recently deleted on the computer, with limits of time / size to be configurable via local web pages. |
| | The client may be capable of supporting a Cloud Storage service, including the capability to back-up files and folders into the |
| | NAS when at home or directly into the cloud when on-the-go. |
| Windows version | Client / agent with the features described above ('Computer client features'), compatible with Microsoft Windows XP, Vista 32 bit and 64 bit and Windows 7 32 bit and 64 bit. |
| Mac version | Client / agent with the features described above ('Computer client features'), compatible with all the Mac OS X releases starting from 10.1. |
| Mobile clients features | The desired mobile experience includes: |
| | - the streaming and sideloading of content (video, music, pictures) from the NAS device, involving media transcoding when necessary; |
| | - the synchronisation of selected categories of content (within the limits allowed by the operating system, e.g. excluding content locked by iTunes in 10S); |
| | - the support of standard DLNA use cases (e.g. beaming of content towards renderers available on the local network). |
| | The same experience is provided not only across the home network, but also through remote access to the NAS device. |
| lOS version | Client / agent with the features described above ('Mobile client features'), compatible with: iPhone 3GS and following versions, iPod Touch 3rd generation and following versions, iPad 1st generation and following versions. iPad version. |
| Android version | Client / agent with the features described above ('Mobile client features'), compatible with Android 2.0 and following releases. |
| Transcoding capabilities | Management of up to one Full HD video transcoding process in real-time / two concurrent Full HD video transcoding processes in real-time. All the standard video resolutions up to Full HD (1920 x 1080) supported as both input and output, including but not limited to: |
| | - QVGA (320 x 240) |
| | - VGA (640 x 480) |
| | - PAL (768 x 576) |
| | - SVGA (800 x 600) |
| | - XGA (1024 x 768) |
| | - SXGA+ (1400 x 1050) |
| | - WVGA (854 x 480) |
| | - HD Ready (1280 x 720) |
| | - Full HD (1920 x 1080) |
| Streaming / sideloading via DLNA | Streaming and sideloading of media files with real-time transcoding towards any DLNA client / renderer, adopting the optimal container, codecs and resolution depending on the recipient. Support of adaptive streaming. |
| Streaming / sideloading towards proprietary clients (l0S and Android, as described above in 'Mobile Clients') | Streaming and sideloading of media files with real-time transcoding towards purposely built clients, adopting the optimal container, codecs and resolution depending on the recipient. Support of adaptive streaming. Discovery, transcoding and playing of every media files on the NAS in every folder, including the private folders of single profiles / family members as described above. Support of remote access and premium / encrypted content as specified above in 'Operating System (OS) & User Interface (UI)'. |
| Pre-transcoding of media files | Performed through the PC / Mac clients as defined in 'Computer clients' above, or set via the web management interface. Possibility to select from a list of pre-defined output settings (e.g. tablet, smartphone) or to manually define the parameters of the output format. |
| Video Containers | The support of the following video containers: |
| | AVI |
| | AVC |
| | MKV |
| | MPEG2-TS |
| | MPEG2-PS |
| | MOV |
| | MP4 |
| | M2TS |
| | 3GPP |
| | OGM |
| | ASF |
| | FLV |
| | LATM |
| | NSV |
| | RM |
| Video Codecs | The support of the following video codecs: |
| | MPEG-2 |
| | MPEG-4 |
| | H.264 / AVC |
| | WMV / VC1 |
| | DlvX |
| | XVid |
| | MPEG-1 |
| | H.263 |
| | Theora |
| | RLE |
| | Real Video |
| | Motion JPEG |
| Audio Codecs | The support of the following audio codecs as inputs: |
| | AAC (LC, HE), AAC+, EAAC+ |
| | Dolby Digital AC3 |
| | DTS |
| | MP3 |
| | WMA |
| | MP2 |
| | WAV |
| | OGG Vorbis |
| | AMR-NB |
| | AMR-WB |
| | Musepack (MPC) |
| | FLAC |
| | µLaw |
| | aLaw |
| | Wavpack (WV) |
| | Intel/DVI |
| | True Audio (TTA) |
| | ACELP |
| | G.729 |
| | ADPCM |
| Image Codecs | The support of the following image codecs: |
| | JPEG |
| | GIF |
| | PNG |
| | MJPEG |
| | BMP |
| | TIFF |
| | RAW |
| Video Containers | The device supports at least the following video containers as output formats for the described transcoding processes: MPEG2-TS MP4 |
| Video Codecs | The device supports the following video codecs as output formats for the described transcoding processes: |
| | H.264 / AVC |
| | MPEG-2 |
| Audio Codecs | The device supports the following audio codecs as output formats for the described transcoding processes: |
| | AAC (LC, HE), AAC+, EAAC+ |
| | MP3 |
| Image Codecs | The device supports at least the following image codecs as output formats for the described transcoding processes: |
| | JPEG |
| | GIF |

Sideloading includes the ability to provide requested media to a rendering device for playback at a later time. Typically, sideloading occurs on a portable device such as a smart phone so that the media may be rendered in a different location. Data encryption may be used to restrict sideloaded media to one or a limited group of rendering devices and prevent unauthorised distribution.

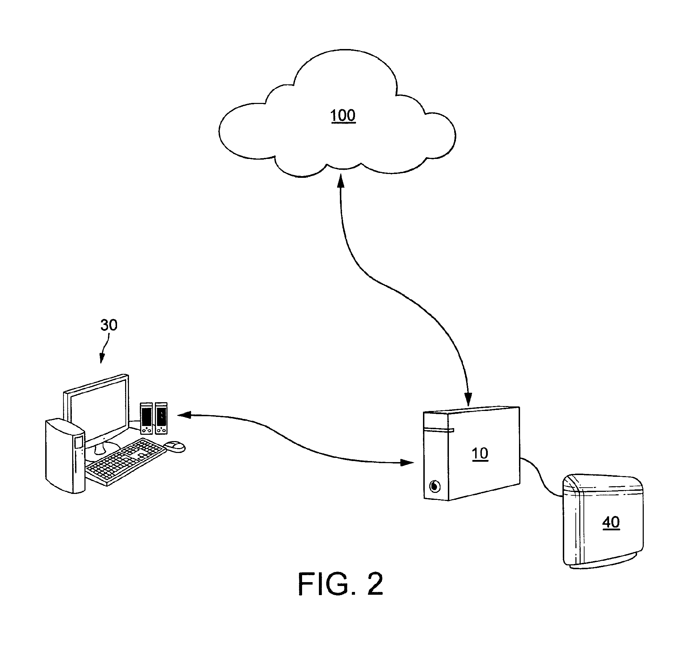

Figure 2 shows a schematic diagram of a method of converting media using the media server 10. The media source 30 in this example is a desktop computer containing media files. The media server 10 may receive information on the requested format from a media renderer 20 (not shown in this figure). However, instead of streaming the converted media to the media renderer 20, the converted or transcoded media is uploaded or synchronised with a network 100, which in this example is a cloud service used as a backup or an online repository of the converted media.

The converted media may also be stored on the local storage device 40 connected to the media server 10.

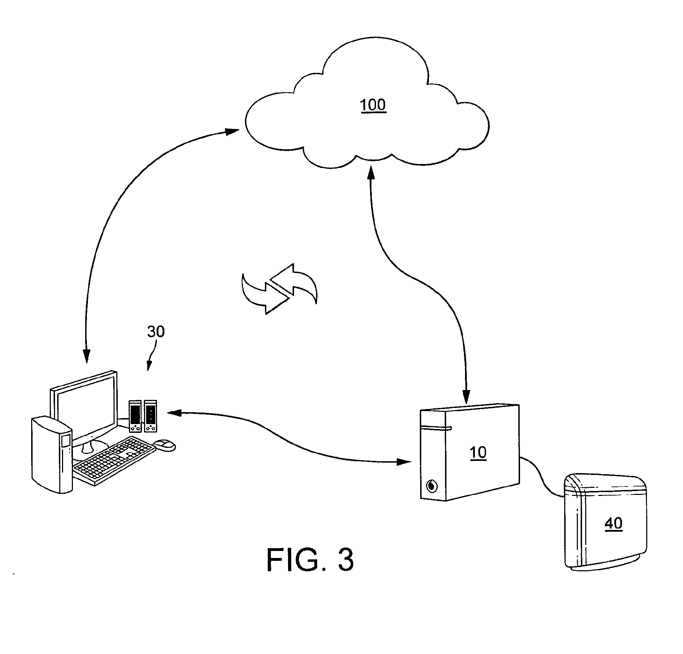

Figure 3 shows a further method for converting media using a cloud-based storage system. This may utilise a cloud client that uses application process interfaces to manage a three-way synchronisation mechanism. The original format media may be synced with the cloud 100 to form a backup of the media stored on the media source 30. Data may also be stored on the local storage device 40. Furthermore, transcoded media may be stored either or both in the cloud 100 or on the local storage device 40. The cloud storage may be used to improve performance by storing previously transcoded and requested media. Therefore, transcoding is not necessary at the time of rendering.

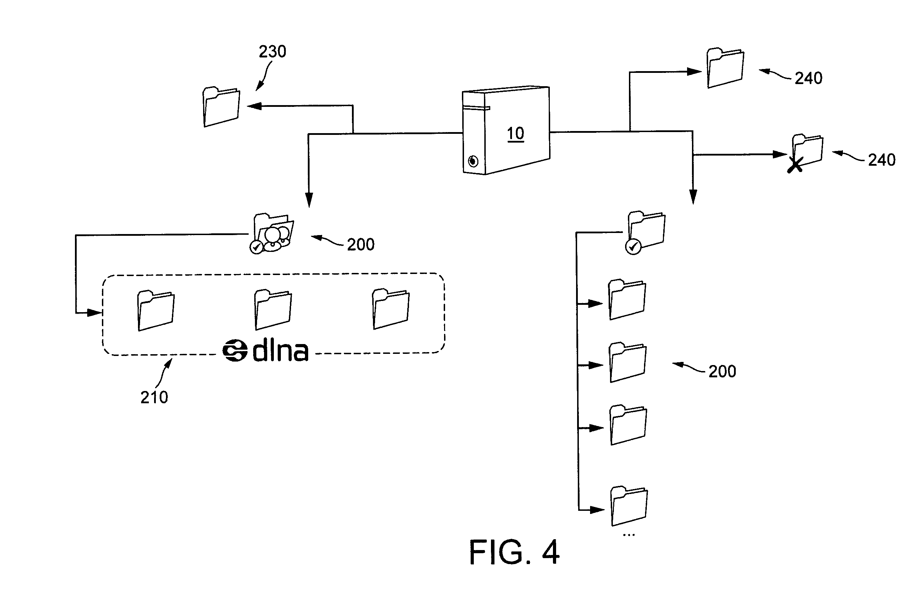

The media server 10 may take the form or have the functionality of a network-attached storage (NAS) device. Figure 4 shows a schematic view of sources of data from various media sources 30. For example, folders 200 may represent user generated media files from devices such as mobile phones, netbooks, laptops or other manually created data. The media server 10 may create or store virtual folders 210 used to aggregate different types of media. These may be separated into video, pictures and music, for example, and categorised as media folders 220. Other user defined categories may be stored in a separate folder 230 and backup folders 240 may also be defined.

The aggregated folders 210 may be visible on rendering devices 20 as specific DNLA defined or available data sources.

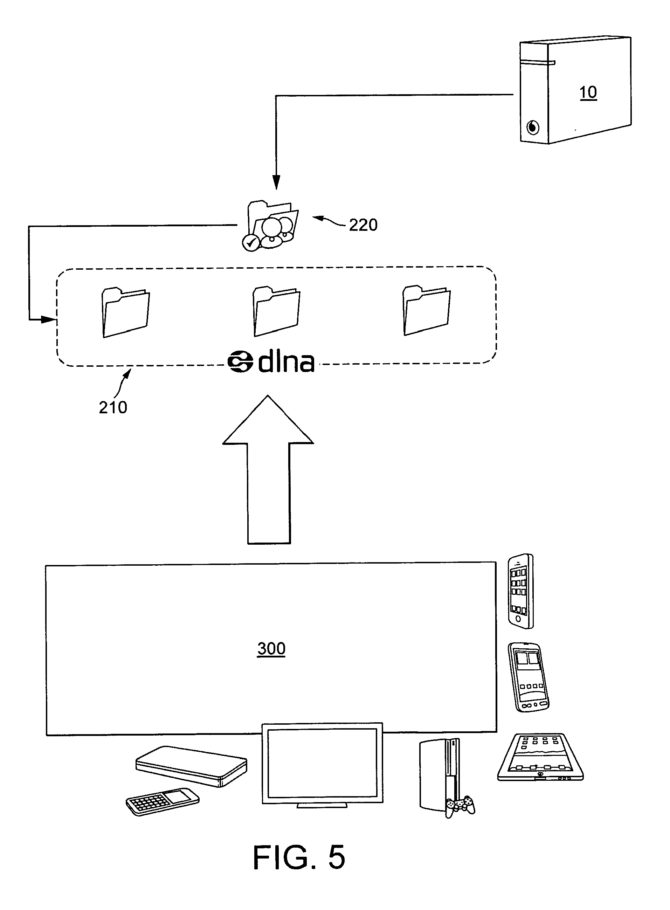

This is illustrated in further detail in figure 5, which shows DLNA clients, players or controllers 300 available on a network and that have access to the media folders 210 providing video, pictures and music with real-time transcoding and/or resizing.

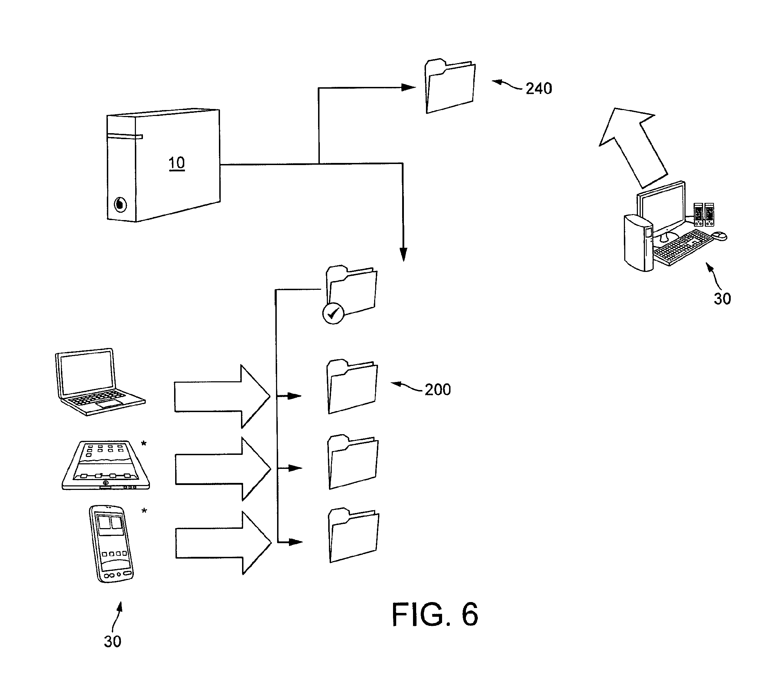

Figure 6 shows a schematic diagram of a procedure for continuous two-way synchronisation of media content with a specific folder or file. For example, data sources 30 may be backed up or synchronised to a specific folder in the folder array 200. This may be an automatic transfer or using drag and drop techniques. Each one of a user's configured devices providing media may be separately configured. Pre-transcoding may be possible when specific files are dragged and dropped if necessary. Dedicated clients on each media supply 30 may include those based on Windows, Mac, iOS and Android, for example.

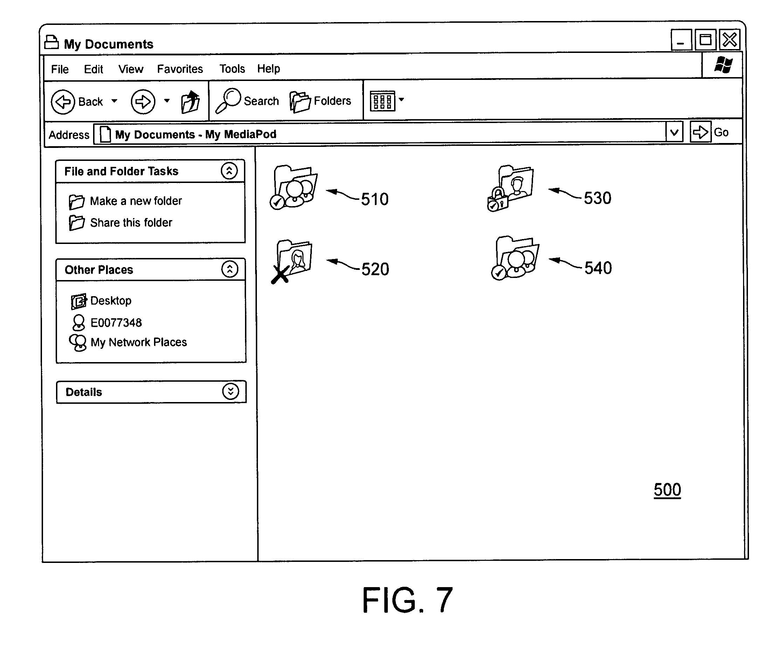

Figure 7 illustrates screen shots viewed from a computer screen belonging to a particular user and illustrating how the media folders 210 and 220 are displayed to the user. Folders 510 are shown having public access available to every user on a network, including the separate video, music and picture folders 210. Other users' personal folders 520 may be shown but may not be accessible to the particular user of this computer screen 500, depending on configuration. Personal folders and files 530 associated with the present user and available to other users are illustrated as well as public backup folders 540.

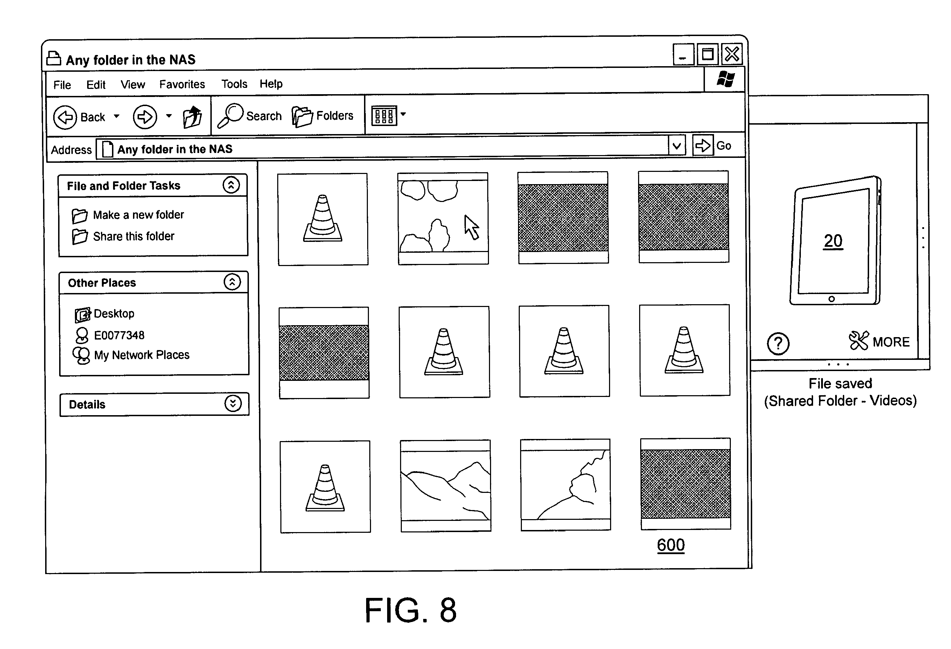

Figure 8 shows a schematic diagram of a screen shot illustrating pre-transcoded media files available to rendering devices 20. These pre-transcoded files may be stored in the separate storage device 40, in the cloud 100 or elsewhere. In this case, the rendering device 20 may request a particular format media file or a compatible format may be determined from the rendering device type and this is supplied to it by the media server 10. Transcoding in real time is not necessary in this case, as the converted media is already in the correct or requested format. Several different transcoded versions may be stored that may correspond with different requested media file types and provided on request.

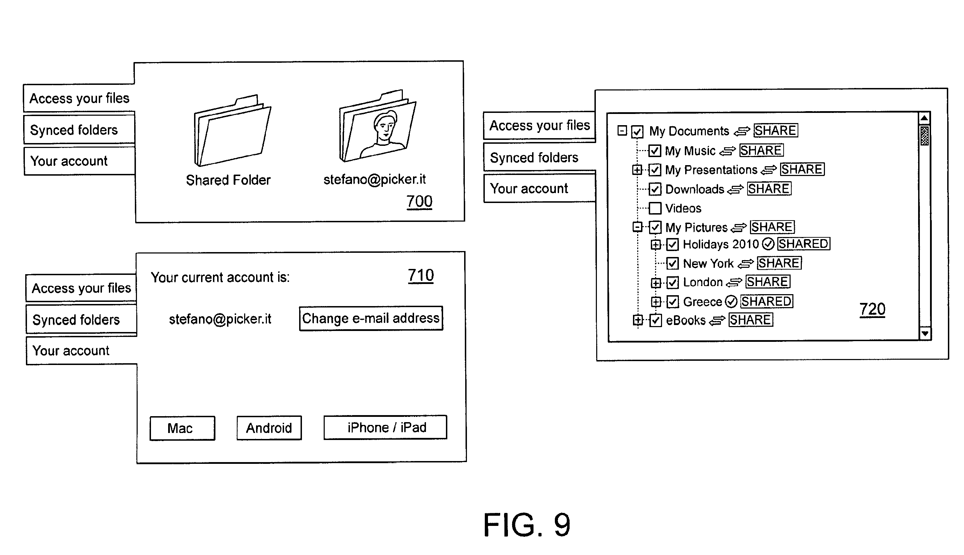

Figure 9 shows a schematic diagram of the various synchronisation settings that may be set up on the user's computer. For example, access to particular shared and personal folders may be controlled by various settings. The particular folders may be selected in window 700. Selecting an account tab provides various security and account information in window 710. Each particular folder and media type may be configured in window 720 including selecting or deselecting individual folders to share or synchronise. A background agent may be run that keeps selected folders in constant synchronisation with the media server 10.

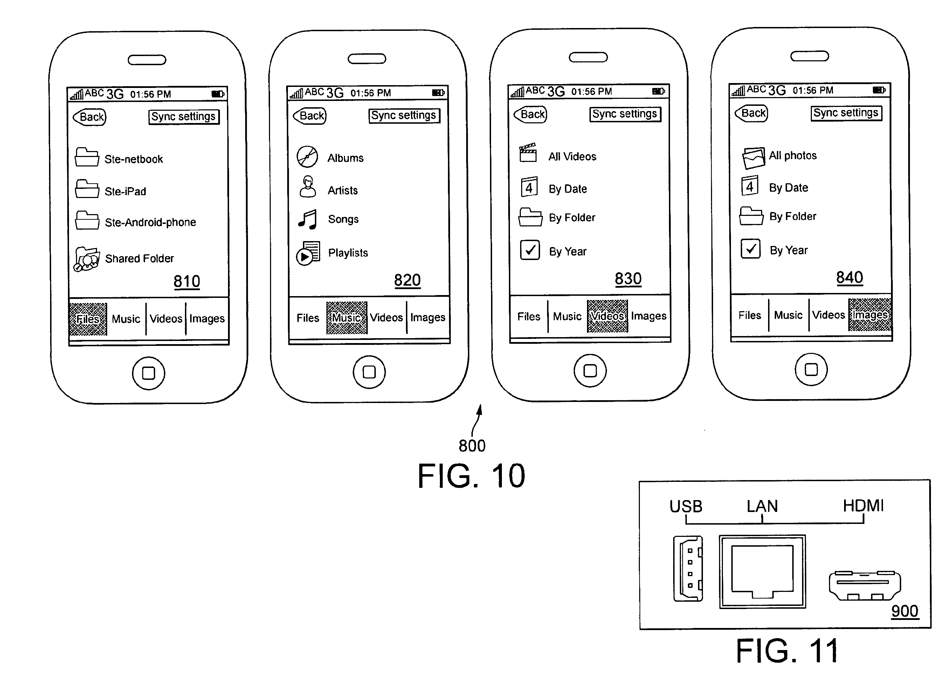

Figure 10 shows example screen shots 800 on a requesting device, which in this case is a mobile telephone or smart phone. Interaction with the media server 10 may be in the form of a dedicated application. Screen shot 810 illustrates the view for all files available from the media server. Screen shot 820 shows all shared music and personal folders including any playlists. Screen shot 830 shows transcoded videos from shared or personal folders. Screen shot 840 shows resized images from shared or personal folders.

Figure 11 shows example wired interfaces 900 available on the media server 10. This may include one or more USB, LAN, and/or HDMI ports. These interfaces may be used to receive media, transmit media to a rendering device 20, receive a request for a particular media in a particular format or a combination of any or all of these functions. Wireless interfaces, such as those based on the IEEE 802.11 standard may be used instead of or as well as wired interfaces.

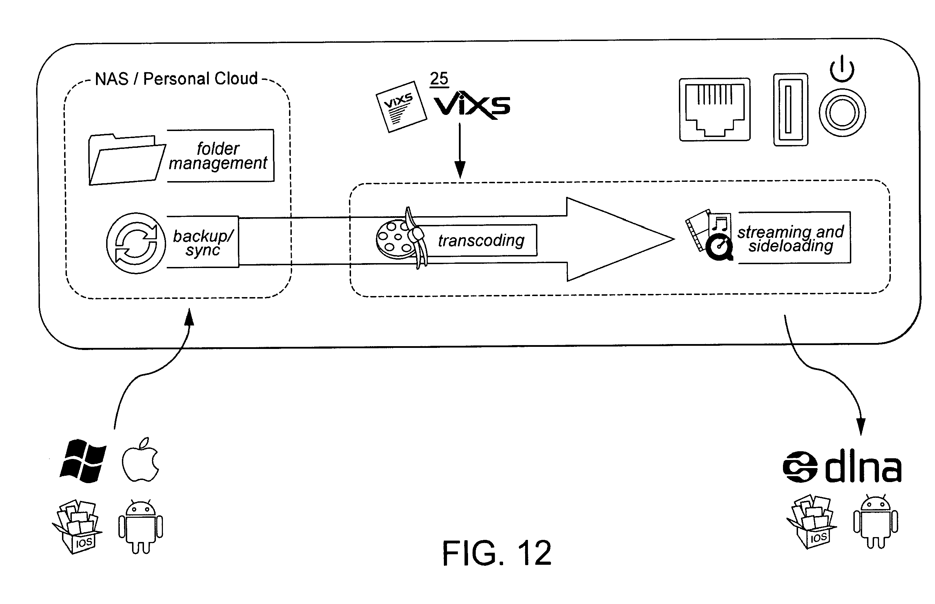

Figure 12 shows an overview of the method for converting media from an original format to a requested format. On the left hand side of this diagram, synchronised or backed up media may be provided from one or more media sources 30. On the right hand side of the diagram, one or more requested devices 20 may request a particular media source in a particular format. The media server 10 receives these requests and provides any necessary transcoding using hardware or software based transcoders.

As will be appreciated by the skilled person, details of the above embodiment may be varied without departing from the scope of the present invention, as defined by the appended claims.

For example, the media server 10 may be combined with one or more media sources. The media server 10 may include other types of data storage or onboard memory. The request from the rendering device may originate in a application or client residing on the rendering device.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A media server comprising:
a media input configured to receive media;
a transcoder for converting media from an initial format to a compatible format; and
logic configured to:
receive information identifying a rendering device,
receive a request for media from the rendering device,
determine if the requested media is in a format compatible with the rendering device, and
if not in a compatible format then instruct the transcoder to convert the requested media into a compatible format of the rendering device.

2. The media server of claim 1 further comprising data describing compatible formats for a plurality of rendering devices.

3. The media server of claim 1 or claim 2, wherein the transcoder is a hardware transcoder.

4. The media server according to any previous claim further comprising data storage for storing the media in either or both the initial format and/or the converted format.

5. The media server according to any previous claim, wherein the media input is configured to receive media from an external network.

6. The media server according to any previous claim, wherein the transcoder is arranged to transcode the media at the same rate that the media is received at the media input.

7. The media server according to any previous claim further comprising an interface configured to communicate with the rendering device, receive media, the information identifying the rendering device and the request and/or transmit the requested media.

8. The media server according to claim 7, wherein the interface is configured to use digital living network alliance, DLNA, and/or universal plug and play, UPnP, protocols.

9. The media server according to any previous claim, wherein the initial format and the converted format are any one or more video codecs selected from the group consisting of MPEG-2, MPEG-4, H.264, AVC, WMV, VC1, DivX, XVid, MPEG-1, H.263, Theora, RLE, Real Video and Motion JPEG.

10. The media server according to any previous claim, wherein the initial format and the converted format are any one or more video containers selected from the group consisting of AVI, AVC, MKV, MPEG2-TS, MPEG2-PS, MOV, MP4, M2TS, 3GPP, OGM, ASF, FLV, LATM, NSV and RM.

11. The media server according to any previous claim, wherein the logic is further configured to transmit the converted media in a format suitable to be stored for later playback on the rendering device.

12. The media server according to any previous claim, wherein the media is any one or more selected from the group consisting of: still image; video; audio; music; text; electronic book; 3D video; digital media; analogue media; live video; live audio; and games.

13. A method of serving media comprising the steps of:
receiving information identifying a rendering device;
receiving a request for media from the rendering device,
determining if the requested media is in a format compatible with the rendering device, and
if not in a compatible format then converting the received media from the initial format to the requested format; and
sending the requested media to the rendering device in the compatible format.

14. The method of claim 13, wherein determining if the requested media is in a format compatible with the rendering device further comprised the step of consulting data describing compatible formats for a plurality of rendering devices.

15. A computer program comprising program instructions that, when executed on a computer cause the computer to perform the method of claim 13 or claim 14.

16. A computer-readable medium carrying a computer program according to claim 15.
